# EUROPEAN PATENT APPLICATION

(11) **EP 3 528 597 A1**
(43) Date of publication of application: **21.08.2019**
(21) Application number: 19155186.0
(22) Date of filing: 04.02.2019
(51) Int. Cl.: H05B 6/64, F24C 15/16

(54) **EXTRACTABLE GUIDES AT A HOUSEHOLD APPARATUS, PARTICULARLY AT AN OVEN**

(30) Priority: 14.02.2018 SI 201800036
(71) Applicant: GORENJE gospodinjski aparati, d.d., 3503 Velenje (SI)
(72) Inventor: BREZOVNIK, Blaz, 3313 Polzela (SI)
(74) Representative: Ivancic, Bojan

(57) **Abstract**

The present invention refers to a household apparatus, in particular to an oven, and preferably to a multi-functional oven capable of using microwaves, and/or to a microwave oven, comprising extractable guides for accommodating a receptacle for the goods to be thermally treated, said extractable guides being movably supported relative to a support part of the guides and, respectively, relative to a side wall of the oven. The extractable guides comprise a stationary carrier (12) fixed to a grid-like support (9) and extending along a side wall (2, 3) of the oven, an intermediate movable carrier (14) arranged along stationary carrier (12) and spaced therefrom, and an external movable carrier (18) arranged along the intermediate movable carrier (14) and spaced therefrom, said carriers (12, 14, 18) being electrically separated from each other.

## Description

The present invention refers to a household apparatus, in particular to an oven, and preferably to a multi-functional oven capable of using microwaves, and/or to a microwave oven, comprising extractable guides for accommodating a receptacle for the goods to be thermally treated, said extractable guides being movably supported relative to a support part of the guides and, respectively, relative to a side wall of the oven. In addition, the invention refers also to an oven comprising said extractable guides.

Exemplary, extractable guides to be used in microwave ovens are disclosed in the document DE 10 2013 214 852 A1. All known solutions are comprised of guides that can be extracted only partially, resulting in a receptacle for the goods to be thermally treated, when extracted, remains with the majority thereof in the backing compartment which is a major drawback. Additional problem in the form of unwanted heating of the known guides in the microwave oven is present, wherein the guides may be heated even to the temperatures between 90 °C and 120 °C.

It is the object of the present invention to create extractable guides for a household apparatus, in particular for an oven, and preferably for a multi-functional oven capable of using microwaves, and/or for a microwave oven, wherein said guides can be extracted entirely from the baking compartment of the oven.

According to the present invention, the object as set above is solved by features set forth in the characterising part of claim 1. Detail of the invention is disclosed in respective subclaims.

The invention is further described in detail by way of non-limiting embodiment, and with a reference to the accompanying drawings, where
- Fig. 1: shows a schematic three-dimensional view of a microwave oven,
- Fig. 2: shows a three-dimensional view of extractable guide of a microwave oven of Fig. 1 in the base position,

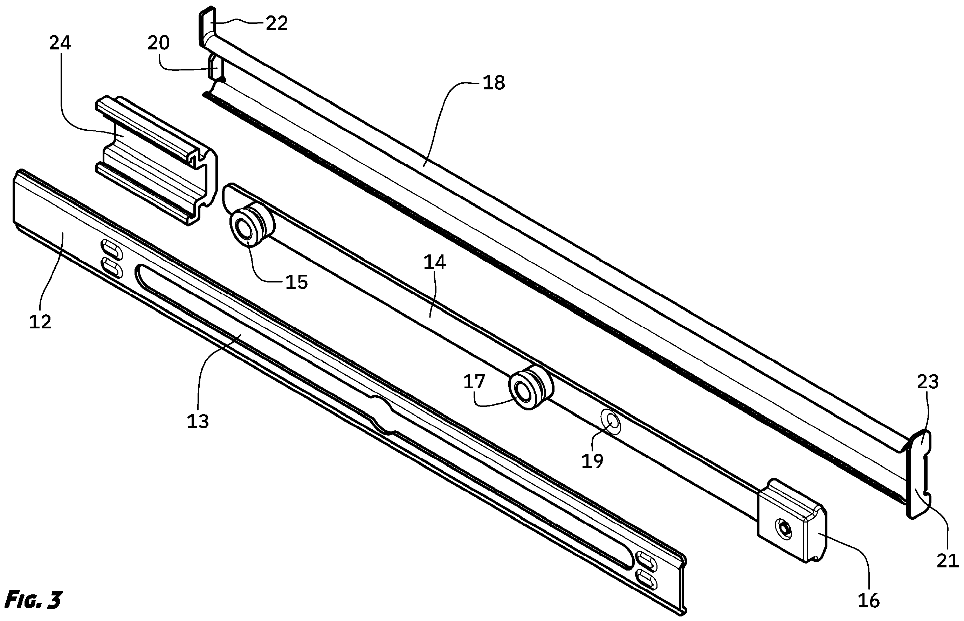

- Fig. 3: shows an exploded three-dimensional view of another embodiment of the extractable guide,

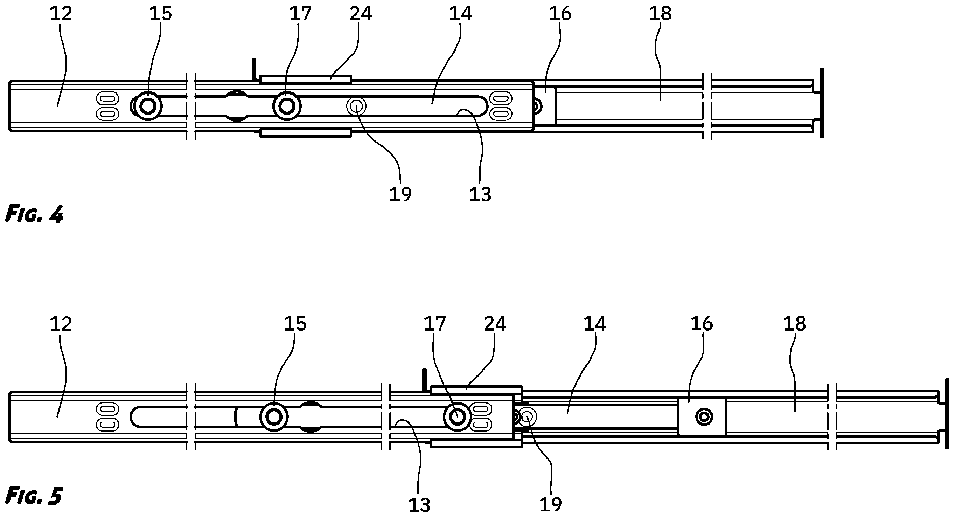

- Fig. 4: shows extractable guide according to the invention in a first and, respectively, in a partially extracted position,
- Fig. 5: shows extractable guide according to the invention in a second and, respectively, in a fully extracted position.

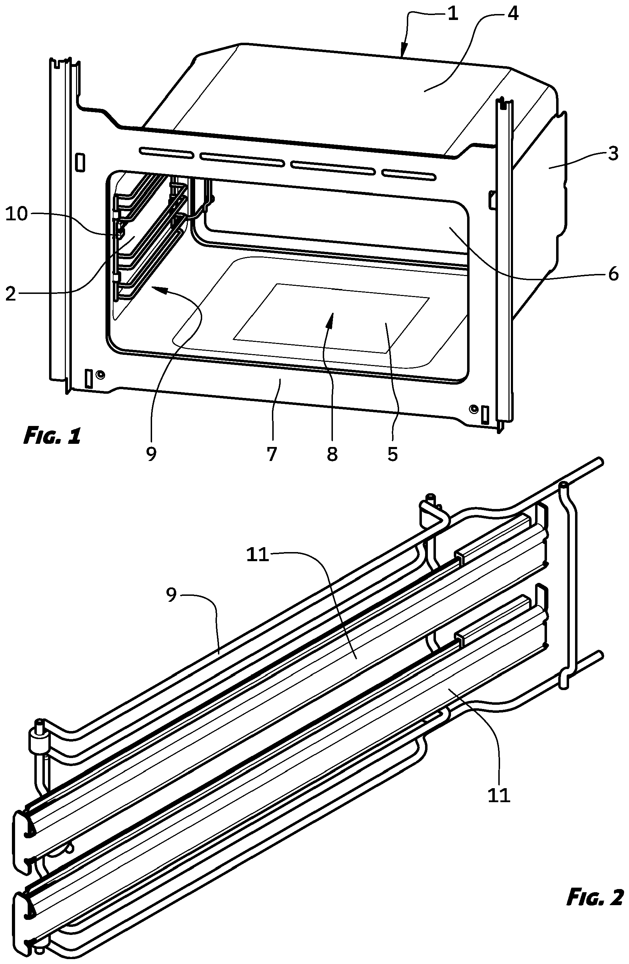

The invention is further described on the basis of a household apparatus being selected as a microwave oven. Fig. 1 shows only inner part of the microwave oven, i.e. a baking part, comprising a mantle 1 consisting of side walls 2, 3, a ceiling 4 and a bottom 5, a back wall 6 and a front wall 7 forming together a baking compartment 8 to accommodate the goods to be thermally treated. Said backing compartment 8 can be closed by a door not shown.

At least one grid-like support 9 is arranged along each side wall 2, 3 of the baking compartment, said support 9 being fixed by means of at least one holder 10, preferably by two holders, to each wall 2, 3. To this extent, said wall 2, 3 being formed with respective cut-outs. Each grid-like support 9 comprises at least one horizontal extractable guide 11 connected in a manner known per se, and not shown, with said grid-like support 9.

Each extractable guide 11 comprises a flat stationary carrier 12 attached to said grid-like support 9 and extending along the side wall 2, 3, optionally said stationary carrier 12 being electrically separated from said grid-like support 9. said flat stationary carrier 12 is formed in the longitudinal direction thereof with an elongated cut-out 13 extending over the majority of the carrier 12. Said cut-out 13 is configured for cooperation with an intermediate movable carrier 14.

Furthermore, said each extractable guide 11 comprises said intermediate movable carrier 14 arranged along the stationary carrier 12 and spaced there form, wherein said intermediate movable carrier 14 being electrically separated from said stationary carrier 12. A first bearing element 15 is associated with the movable carrier 14 at the first end thereof lying close to the back wall 6 of the microwave oven and at the side facing the stationary carrier 12, and a second bearing element 16 is associated with the movable carrier 14 at the side averted from the stationary carrier 12. Moreover, an intermediate bearing element 17 is associated with the movable carrier 14 in the region between the first and the second bearing element 15, 16, preferably closer to the second bearing element 16 and at the side facing the stationary carrier 12. Said bearing elements 15, 17 are configured to cooperate directly with said cut-out 13 of the stationary carrier 12 and comprise a respective groove by means of which they are guided in the cut-out 13. Said bearing element 16 is configured to cooperate with an external movable carrier 18. Furthermore, the movable carrier 14 is formed in the region between the bearing elements 16, 17 and at the side averted from the stationary carrier 12 with a rest 19.

Furthermore, each said extractable guide 11 comprises said external movable carrier18 arranged along the movable carrier 14 and spaced there from, said external movable carrier 18 being electrically separated from said movable carrier 14. Said external movable carrier 18 is U-formed or C-formed or similarly formed in its cross-section, the web of such a section being in parallel with and averted from each wall 2, 3 of the microwave oven, so that said carriers 12, 14 can be received into the external movable carrier 18. Said carrier 18 is formed at each free end thereof with a fold 20, 21 extending in the direction approximately perpendicular to the wall 2, 3 of the microwave oven, and with a projection 22, 23 extending in the direction approximately in parallel with the wall 2, 3 of the microwave oven. Moreover, a slider 24 is firmly arranged on said carrier 18, at the first end thereof lying close to the back wall 6 of the microwave oven and at the side facing the movable carrier 14, said slider 24 configured for sliding cooperation with the movable carrier 14. A second end, i.e. the opposite end of said carrier 18 and flanges thereof extending approximately perpendicular to said web are configured to accommodate said bearing element 16 and to cooperate therewith.

Said bearing elements 15, 16, 17 and said slider 24 are formed of electrically non-conductive material, such as of poly-tetrafluoroethylene (Teflon®) and similar, in order to ensure said electrical separation of the stationary carrier 12 and the intermediate movable carrier 14, and the intermediate movable carrier 14 and the external movable carrier 18. Furthermore, the bearing elements 15, 16, 17 can be formed as rolling elements or as sliding elements.

Said fold 20 is configured to accommodate said slider 24, whereas said fold 21 is configured as a rest for said bearing element 16. Said projections 22, 23 of each external movable carrier 18 are configured as limits for mounting the receptacle for the goods to be thermally treated.

In order to prevent possible transversal movements against each other an additional slider of electrically non-conductive material, such as of poly-tetrafluoroethylene (Teflon®) and similar, is optionally provided either between a stationary carrier 12 and the intermediate movable carrier 14 and/or between the intermediate movable carrier 14 and the external movable carrier 18. Said additional slider can be fixed to any of the carriers 12, 14, 18.

In order to obtain with extractable guides 11 according to the invention a first i.e. a partially extracted position, the external movable carrier 18, said slider 24 being fixed thereto, is pulled in direction away from the back wall 6. Here, the external movable carrier 18 slides by means of at least one of said flanges over said bearing element 16, whereas the external movable carrier 18 slides by means of said slider 24 over the intermediate movable carrier 14 until the slider 24 is pressed against said rest 19 on the intermediate movable carrier 14.

When the slider 24 is pressed against said rest 19 on the intermediate movable carrier 14, the extracting motion of the external movable carrier 18 takes also the intermediate movable carrier 14 along. As a result, the latter slides by means of the bearing elements 15, 17 in said cut-out 13 of the stationary carrier 12 until the second i.e. the utmost extracted position of the guides 11 is reached, wherein the intermediate bearing element 17 is pressed against the end wall of the cut-out 13 in the stationary carrier 12.

The extractable guides 11 according to the present invention enable the user to access freely the receptacle for the goods to be thermally treated. Said electrical separation of the elements that constitute the extractable guides 11 allows for the all constituent parts of the extractable guides 11 according to the invention to stay relatively cold. As a rule, during operation of the microwave oven the temperature of the extractable guides 11 remains below 70 °C.

## Claims

1. Extractable guides at a household apparatus, in particular at an oven, and preferably at a multi-functional oven capable of using microwaves, and/or at a microwave oven, provided for accommodation a receptacle for the goods to be thermally treated, said extractable guides being movably supported relative to a support part of the guides and, respectively, relative to a side wall of the oven, ***characterized in that*** extractable guides comprise a stationary carrier (12) fixed to a grid-like support (9) and extending along a side wall (2, 3) of the oven, an intermediate movable carrier (14) arranged along stationary carrier (12) and spaced therefrom, and an external movable carrier (18) arranged along the intermediate movable carrier (14) and spaced therefrom, said carriers (12, 14, 18) being electrically separated from each other.

2. Extractable guides according to claim 1, ***characterized in that*** said flat carrier (12) is formed in its longitudinal direction with an elongated cut-out (13) configured to cooperate with the intermediate movable carrier (14).

3. Extractable guides according to claims 1 and 2, ***characterized in that*** a first bearing element (15) is associated with a first end of the movable carrier (14), and a second bearing element (16) is associated with an opposite end of the movable carrier (14), and an intermediate bearing element (17) is associated with the stationary carrier (14) in the region between the first and the second bearing element (15, 16), said bearing elements (15, 17) configured for direct cooperation with said cut-out (13) of the stationary carrier (12), and said bearing element (16) configured for cooperation with the external movable carrier (18), wherein the movable carrier (14) being formed in the region between the bearing elements (16, 17) with a rest (1)9.

4. Extractable guides according to claim 3, ***characterized in that*** the first bearing element (15) and the intermediate bearing element (17) comprise a groove by means of which they are guided in the cut-out (13).

5. Extractable guides according to claims 1 to 3, ***characterized in that*** said external movable carrier (18) comprises a U formed or C formed or similar formed cross-section, so that said carriers (12, 14) can be received into the external movable carrier (18), wherein a slider (24) is firmly arranged on said carrier (18), at the first end thereof lying close to a back wall (6) of the microwave oven and at the side facing the movable carrier (14), said slider (24) configured for sliding cooperation with the movable carrier (14), whereas the second end, i.e. the opposite end of said carrier (18) configured to accommodate said bearing element (16) and to cooperate therewith.

6. Extractable guides according to any of the preceding claims, ***characterized in that*** said electrical separation of the carriers (12, 14, 18) is obtained by means of the bearing elements (15, 16, 17) and the slider (24).

7. Extractable guides according to any of the preceding claims, ***characterized in that*** said bearing elements (15, 16, 17) and said slider (24) are formed, in order to provide said electrical separation of the stationary carrier (12) and the intermediate movable carrier (14), and the intermediate movable carrier (14) and the external movable carrier (18), of electrically non-conductive material, such as of poly-tetrafluoroethylene (Teflon®) and similar.

8. Extractable guides according to any of the preceding claims, ***characterized in that*** the bearing element (15, 16, 17) can be formed either as a rolling elements or as sliding elements.

9. Extractable guides according to any of the preceding claims, ***characterized in that*** an additional slider of electrically non-conductive material, such as of poly-tetrafluoroethylene (Teflon®) and similar, is provided either between the stationary carrier (12) and the intermediate movable carrier (14), and/or between the intermediate movable carrier (14) and the external movable carrier (18), thus preventing possible transversal movements against each other.

10. A household apparatus, particularly an oven, comprising extractable guides according to any of the preceding claims.

11. A household apparatus according to claim 10, ***characterized in that*** the household apparatus is a multi-functional oven capable of using microwaves.

12. A household apparatus according to claim 10, ***characterized in that*** the household apparatus is a microwave oven.
